# EUROPEAN PATENT APPLICATION

(11) **EP 4 822 458 A1**
(43) Date of publication of application: **14.10.2026**
(21) Application number: 24910223.7
(22) Date of filing: 24.10.2024
(51) Int. Cl.: G05B 19/042

(54) **CONTROL METHOD AND RELATED APPARATUS**

(30) Priority: 27.12.2023 CN 202311832633
(71) Applicant: Huawei Technologies Co., Ltd., Shenzhen, Guangdong 518129 (CN)
(72) Inventor: REN, Yi, Shenzhen, Guangdong 518129 (CN); XIE, Liang, Hangzhou, Zhejiang 310058 (CN); WANG, Yue, Hangzhou, Zhejiang 310058 (CN); YU, Sai, Shenzhen, Guangdong 518129 (CN)
(74) Representative: Goddar, Heinz J.
(86) International application number: PCT/CN2024/126923
(87) International publication number: WO 2025/139282

(57) **Abstract**

A control method, a control apparatus (70), an electronic apparatus (80), and a computer-readable storage medium are provided. In the control method, multi-modal data such as an image, force data, and motion data may be fused to obtain fused data, and multi-dimensional feature information is extracted from the fused data by using a trained reinforcement learning model, to determine a control policy for a mechanical device, so that the mechanical device can successfully complete an assembly task based on the multi-dimensional feature information in a plurality of scenarios, thereby improving a success rate and robustness of executing the assembly task by the mechanical device.

## Description

This application claims priority to Chinese Patent Application No. 202311832633.4, filed with the China National Intellectual Property Administration on December 27, 2023, and entitled "CONTROL METHOD AND RELATED DEVICE", which is incorporated herein by reference in its entirety.

### TECHNICAL FIELD

This application relates to the field of control technologies, and specifically, to a control method and a related device.

### BACKGROUND

The rapid development of the Internet and informatization promotes the development of robotic technologies. Robots gradually emerge in various industries to help people complete various complex tasks.

However, currently, in many industrial scenarios, automatically executing a high-precision assembly task such as peg-in-hole assembly by using a mechanical device such as a robot is still a huge challenge.

A peg-in-hole assembly task is used as an example. In daily life and industrial production and manufacturing, common peg-in-hole assembly tasks may include charger insertion and extraction, key insertion and extraction, peg-in-hole insertion and extraction, and the like. In a high-precision industrial-grade assembly scenario, it is still difficult to implement high-reliability insertion and extraction in a task-changing environment currently.

### SUMMARY

Embodiments of this application provide a control method, to resolve a problem that currently it is difficult to complete a high-precision assembly task such as peg-in-hole assembly by using a mechanical device such as a robot. This application further provides a corresponding apparatus, a device, a computer-readable storage medium, a computer program product, and the like.

A first aspect of this application provides a control method, where the method includes: obtaining multi-modal data, where the multi-modal data includes at least two of image modal data, force data, and motion data, and the multi-modal data includes an assembly position indicated by an assembly task and information about a mechanical device that is to execute the assembly task; fusing the multi-modal data to obtain fused data; and controlling, based on the fused data and by using a trained reinforcement learning model, the mechanical device to execute the assembly task.

In the first aspect, the multi-modal data such as an image, force data, and motion data may be fused to obtain the fused data, and multi-dimensional feature information is extracted from the fused data by using the trained reinforcement learning model, to determine a control policy for the mechanical device, so that the mechanical device can successfully complete the assembly task based on the multi-dimensional feature information in a plurality of scenarios, thereby improving a success rate and robustness of executing the assembly task by the mechanical device.

In a possible implementation of the first aspect, the method further includes: obtaining a target pose of the mechanical device in a teaching mode, where the target pose indicates that a relative position between the mechanical device and the assembly position indicated by the assembly task satisfies a specified condition; obtaining, based on the target pose, an assembly path corresponding to each initial pose of the mechanical device, and using initial fused data and the assembly path corresponding to the initial pose as a group of training data; and training a reinforcement learning model based on one or more groups of training data, to obtain the trained reinforcement learning model.

In this possible implementation, the target pose may be determined through a single teaching operation, to implement repeated positioning of the mechanical device by using the target pose. It can be learned that the target pose determined in the teaching mode may be used as a virtual expert, and automatic repeated positioning and correct assembly of the mechanical device may be implemented in any random initial pose, so that a plurality of groups of training data are efficiently obtained, and training data is efficiently provided for subsequent reinforcement learning model training without a large quantity of manual operations, to greatly improve training efficiency.

In a possible implementation of the first aspect, training of the reinforcement learning model includes one or more iterative processes, where an i^{th} iterative process includes one or more assembly processes, each assembly process includes at least one action, each action corresponds to a group of state transition data, each group of state transition data includes first fused data before a corresponding action, parameter information of the corresponding action, second fused data after the corresponding action, and reward information of the corresponding action, the reward information is determined based on an assembly result of an assembly process to which the corresponding action belongs, and i is a positive integer. In the i^{th} iterative process, the method includes: updating the reinforcement learning model in the i^{th} iterative process based on one or more groups of state transition data in the i^{th} iterative process.

In a possible implementation of the first aspect, in a j^{th} assembly process of the i^{th} iterative process, the method includes: determining at least one action in the j^{th} assembly process based on a probability of the i^{th} iterative process, a probability threshold, and an initial pose in the i^{th} iterative process, where j is a positive integer.

In this possible implementation, the probability may reflect a possibility of successfully completing the assembly process. In different probability intervals (for example, less than the probability threshold and greater than the probability threshold), the action in the assembly process may be determined in different manners.

In a possible implementation of the first aspect, determining the at least one action in the j^{th} assembly process based on the probability of the i^{th} iterative process, the probability threshold, and the initial pose in the i^{th} iterative process includes: if the probability of the i^{th} iterative process is greater than the probability threshold, determining the action in the j^{th} assembly process based on first fused data before the action in the j^{th} assembly process and by using the reinforcement learning model in the i^{th} iterative process; or if the probability of the i^{th} iterative process is not greater than the probability threshold, determining the action in the j^{th} assembly process based on the target pose and a pose of the mechanical device before the action in the j^{th} assembly process.

In this possible implementation, if the probability of the i^{th} iterative process is not greater than the probability threshold, it indicates that in the assembly process of the i^{th} iterative process, a probability of successfully completing assembly is relatively low. In this case, the training process may be in an early stage.

To avoid damage caused by an incorrect assembly process to the mechanical device, a target position, and the like, and to improve training efficiency and accelerate a convergence speed, when the probability of the i^{th} iterative process is not greater than the probability threshold, the action in the j^{th} assembly process may be determined based on the target pose and the first fused data before the action in the j^{th} assembly process.

If the probability of the i^{th} iterative process is greater than the probability threshold, it indicates that in the assembly process of the i^{th} iterative process, a probability of successfully completing assembly is relatively high. In this case, the training process may be in a later stage.

In this case, the first fused data before the action in the j^{th} assembly process may be processed by using the reinforcement learning model in the i^{th} iterative process, to obtain the action in the j^{th} assembly process.

In a possible implementation of the first aspect, the method further includes: updating the probability of the i^{th} iterative process based on a success rate of the one or more assembly processes included in the i^{th} iterative process.

In a possible implementation of the first aspect, controlling, based on the fused data and by using the trained reinforcement learning model, the mechanical device to execute the assembly task includes: determining an expected position of the mechanical device in a next step based on the fused data and by using the trained reinforcement learning model; determining an expected speed of the mechanical device in the next step based on the expected position in the next step, and a rigidity characteristic, a damping characteristic, and an inertia characteristic of the mechanical device; and controlling, based on the expected speed in the next step, the mechanical device to move.

In this possible implementation, after the expected speed in the next step is determined, the mechanical device may be controlled, based on the expected speed in the next step, to implement a flexible motion characteristic, to avoid device damage caused by collision with an object such as the assembly position in a process of executing the assembly task, and ensure security of the mechanical device in the process of executing the assembly task.

In a possible implementation of the first aspect, controlling, based on the expected speed in the next step, the mechanical device to move includes: controlling, based on the expected speed in the next step and force feedback information of the mechanical device, the mechanical device to move.

In this possible implementation, the force feedback information of the mechanical device is used to reflect a status of an external force currently suffered by the mechanical device, to determine whether the mechanical device is currently impacted or the like. If the force feedback information indicates that the mechanical device is currently not subjected to the external force, the expected speed in the next step is used as an execution speed, to control the mechanical device to move based on the execution speed. However, if the force feedback information indicates that the mechanical device is currently subjected to the external force, a smaller value of the expected speed in the next step and a preset speed may be used as the execution speed, to control the mechanical device to move based on the execution speed, control the mechanical device to implement a flexible motion characteristic, avoid device damage caused by collision with an object such as the assembly position in a process of executing the assembly task, and ensure security of the mechanical device in the process of executing the assembly task.

In a possible implementation of the first aspect, obtaining the multi-modal data includes: separately obtaining data of different modalities in the multi-modal data by using a plurality of processes.

In this possible implementation, the data of the different modalities in the multi-modal data may be separately obtained by using a plurality of processes, so that parallel obtaining and processing of the data of the different modalities can be implemented, to improve collection and processing efficiency of the data of the different modalities.

In a possible implementation of the first aspect, the multi-modal data includes the image modal data, and further includes the force data and/or the motion data; and fusing the multi-modal data to obtain the fused data includes: processing the image modal data by using an encoder, to obtain a feature representation corresponding to the image modal data; and fusing the feature representation with the force data and/or the motion data, to obtain the fused data.

In this possible implementation, feature extraction may be performed on the image modal data by using the encoder, and the image modal data is mapped to a low-dimensional feature representation (for example, a one-dimensional feature representation), so that the low-dimensional feature representation may be spliced with the one-dimensional force data and/or motion data, to implement effective fusion of the multi-modal data and obtain the fused data.

In a possible implementation of the first aspect, before obtaining the multi-modal data, the method further includes: controlling, based on the assembly position, the mechanical device to perform coarse positioning.

In this possible implementation, coarse positioning means that a distance between the mechanical device and a target position is within a specified range, for example, less than a specified distance threshold, so that a high-precision assembly task is executed subsequently with relatively high precision. For example, the mechanical device may be controlled, based on depth image information and the assembly position, to perform coarse positioning.

A second aspect of this application provides a control apparatus, and the control apparatus has a function of implementing the method according to any one of the first aspect or the possible implementations of the first aspect. The function may be implemented by hardware, or may be implemented by hardware executing corresponding software. The hardware or the software includes one or more modules corresponding to the function, for example, an obtaining module and a processing module.

A third aspect of this application provides an electronic device. The control device includes at least one processor, a memory, and computer-executable instructions stored in the memory and executable on the processor. When the computer-executable instructions are executed by the processor, the processor performs the method according to any one of the first aspect or the possible implementations of the first aspect.

A fourth aspect of this application provides a computer-readable storage medium storing one or more computer-executable instructions. When the computer-executable instructions are executed by a processor, the processor performs the method according to any one of the first aspect or the possible implementations of the first aspect.

A fifth aspect of this application provides a computer program product storing one or more computer-executable instructions. When the computer-executable instructions are executed by a processor, the processor performs the method according to any one of the first aspect or the possible implementations of the first aspect.

A sixth aspect of this application provides a chip system. The chip system includes a processor, configured to support a control device in implementing the functions according to any one of the first aspect or the possible implementations of the first aspect. In a possible design, the chip system may further include a memory. The memory is configured to store program instructions and data that are necessary for an electronic device. The chip system may include a chip, or may include a chip and another discrete component.

For technical effects brought by any one of the second aspect to the sixth aspect or the possible implementations of the second aspect to the sixth aspect, refer to the technical effects brought by the first aspect or the related possible implementations of the first aspect. Details are not described herein again.

### BRIEF DESCRIPTION OF DRAWINGS

FIG. 1 is a diagram of an example of a control system according to an embodiment of this application;
FIG. 2A, FIG. 2B, and FIG. 2C are a diagram of an example of a control method according to an embodiment of this application;
FIG. 3 is a diagram of an example of obtaining multi-modal data according to an embodiment of this application;
FIG. 4 is a diagram of an example of a training process of a reinforcement learning model according to an embodiment of this application;
FIG. 5 is a diagram of an example of a control method according to an embodiment of this application;
FIG. 6 is a diagram of an example of a data processing procedure according to an embodiment of this application;
FIG. 7 is a diagram of an embodiment of a control apparatus according to an embodiment of this application; and
FIG. 8 is a diagram of a structure of an electronic device according to an embodiment of this application.

### DESCRIPTION OF EMBODIMENTS

The following describes embodiments of this application with reference to the accompanying drawings in embodiments of this application. Terms used in embodiments of this application are only used to explain specific embodiments of this application, but are not intended to limit this application.

A person of ordinary skill in the art may learn that, with development of technologies and emergence of a new scenario, the technical solutions provided in embodiments of this application are also applicable to a similar technical problem.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items" or a similar expression thereof means any combination of these items, including any combination of singular items or plural items. In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a classification manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

Currently, in many industrial scenarios, automatically executing a high-precision assembly task such as peg-in-hole assembly by using a mechanical device such as a robot is still a huge challenge.

A peg-in-hole assembly task is used as an example. In daily life and industrial production and manufacturing, common peg-in-hole assembly tasks may include charger insertion and extraction, key insertion and extraction, peg-in-hole insertion and extraction, and the like. In a high-precision industrial-grade assembly scenario, it is still difficult to implement high-reliability insertion and extraction in a task-changing environment currently.

Specifically, a conventional method for implementing insertion and extraction is a search-based method, for example, a method based on random search and spiral search. However, an application scenario of the search-based method has an obvious limitation, and a success rate depends on an initial error. As the initial error increases, a peg-in-hole insertion success rate and peg-in-hole insertion efficiency of the method decrease significantly.

Another conventional method for implementing insertion and extraction is a force feedback-based method. In the force feedback-based method, a six-axis force sensor or a tactile sensor may be used for sensing, and then a peg-in-hole insertion policy is executed for closed-loop control. Precision of the force feedback-based method can reach position precision of a mechanical arm. However, the force feedback-based method is also not applicable to a scenario with a large initial error, and peg-in-hole insertion efficiency is difficult to ensure.

In addition, another conventional method for implementing insertion and extraction is a visual feedback-based method. The visual feedback-based method is perceived by using image information. Servo control through visual feedback enables fast peg-in-hole insertion even with large initial errors. However, due to a limitation of camera resolution, an existing visual feedback-based method is difficult to implement a sub-millimeter-level high-precision peg-in-hole insertion task. In addition, image information is easily interfered by a factor such as illumination or a background change, which causes peg-in-hole insertion failure.

Based on this, embodiments of this application provide a control method, to improve accuracy and reliability of executing an assembly task by a mechanical device such as a robot, and to be robust to external interference when an environment changes.

The following describes the control method provided in embodiments of this application.

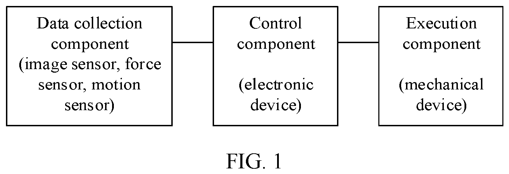

The control method in embodiments of this application may be applied to a control system. As shown in FIG. 1, the control system may include a data collection component, a control component, and an execution component.

In an actual application scenario, there may be a plurality of cases for specific spatial positions of different components in the control system. This is not limited herein.

For example, the different components in the control system may be different devices, or the different components may be integrated into a same device.

In some examples, the execution component may include one or more mechanical devices of a robot, a mechanical arm, an end effector, and the like.

The execution component is configured to execute an assembly task. A specific type of the assembly task is not limited herein. For ease of description, in this embodiment of this application, an example in which the assembly task is a peg-in-hole assembly task is used for description.

The control component in the control system may be an electronic device.

In some examples, the electronic device may be a component other than the execution component. For example, the electronic device may be a terminal device externally connected to a robot.

Alternatively, in some other examples, the electronic device may be integrated with the execution component and/or another component in the control system. For example, the electronic device may be integrated into a robot, and is a control component in the robot. The robot may further be integrated with a mechanical arm, an end effector, and the like.

A specific type of the electronic device and a hardware structure included in the electronic device are not limited herein.

For example, the electronic device may be a terminal device, a single server, or a server cluster, or may be a virtual machine (virtual machine, VM), a container (container), or the like.

When the electronic device is the terminal device, a type of the terminal device is not limited herein.

For example, the terminal device may be one or a combination of a plurality of a mobile phone (mobile phone), a tablet computer (pad), a computer with a wireless transceiver function, a virtual reality (virtual reality, VR) terminal, an augmented reality (augmented reality, AR) terminal, a terminal in industrial control (industrial control), a terminal in self-driving (self-driving), a terminal in remote medical (remote medical), a terminal in a smart grid (smart grid), a terminal in transportation safety (transportation safety), a terminal in a smart city (smart city), a terminal in a smart home (smart home), a terminal in an internet of things (Internet of things, IoT), a wearable device, a robot, and the like.

In some examples, a software control framework in the control component may include a first control layer and a second control layer. The first control layer and the second control layer may be in different hardware such as different chips, or may be in same hardware, but may be implemented by using different processes. This is not limited in this embodiment of this application.

The software control framework may perform multi-modal data collection and fusion by using the two control layers, and may further implement control by using the two control layers, to facilitate efficient processing of multi-modal data, and directly controlling the mechanical device without buffer by using one control layer can be avoided, to improve control accuracy and security.

For an optional implementation of the software control framework, refer to related examples of multi-modal data collection, multi-modal data fusion, and assembly task execution in subsequent embodiments. Details are not described herein again.

The data collection component in the control system is configured to collect the multi-modal data.

A quantity and a type of data collection components may be determined based on a type of the to-be-collected multi-modal data, and a specific structure of the data collection component and a position of the data collection component in the control system are not limited herein.

For example, the data collection component may include one or more of a force sensor, an image sensor, a speed sensor, an acceleration sensor, a gyroscope, and the like.

The force sensor is a device that converts a magnitude of force into a related electrical signal. For example, the force sensor may detect force quantities such as tension, tensile force, pressure, weight, torque, internal stress, or strain. That is, the force sensor can collect force data such as force and torque information.

In an example, for ease of collecting the force data, the force sensor may be disposed on the end effector of the mechanical device.

The image sensor may be configured to collect image modal data such as a two-dimensional image and/or a depth image. In other words, the image sensor may include one or more of the two-dimensional image sensor and the depth image sensor.

In an example, the two-dimensional image sensor may be located at a mechanical arm end in the mechanical device, and the depth image sensor may be fixed at a position other than a component such as the mechanical arm, the end effector, and a hole in the mechanical device, that is, the depth image sensor is fixed in a world coordinate system.

A motion sensor such as the speed sensor, the acceleration sensor, or the gyroscope is configured to detect motion data.

For example, the motion data may include one or more of a speed, an acceleration, rotation information, or pose information of a movable component such as the mechanical arm or the end effector in the mechanical device.

In some examples, the motion sensor may be located on a movable component such as the mechanical arm or the end effector in the mechanical device, to detect a motion status such as an acceleration, a speed, and a position of the movable component.

For example, an example control system may include a mechanical arm, a speed sensor, a two-dimensional image sensor, a depth image sensor, a wrist joint force sensor, a general-purpose two-finger gripper, a host computer, a peg, a hole, and the like. The host computer may be used as the control component in the control system, and the speed sensor, the two-dimensional image sensor, the depth image sensor, and the wrist joint force sensor may be used as the data collection component in the control system. The mechanical arm and the general-purpose two-finger gripper can be used as the execution component in the control system, the peg is a component to be assembled in the assembly task, and the hole is an assembly position in the assembly task.

In the example control system, the mechanical arm is fixed at an origin of the world coordinate system, the speed sensor, the wrist joint force sensor, the two-finger gripper, and the peg are sequentially fixed at an end flange of the mechanical arm, the two-dimensional image sensor is connected to the end flange of the mechanical arm by using an intermediate component, and the depth image sensor and the hole are fixed in the world coordinate system.

Based on the foregoing control system, in the control method in embodiments of this application, the mechanical device may be controlled, based on multi-modal data through a reinforcement learning model, to accurately execute an assembly task, and to be robust against external interference when an environment changes, so that reliability is relatively high.

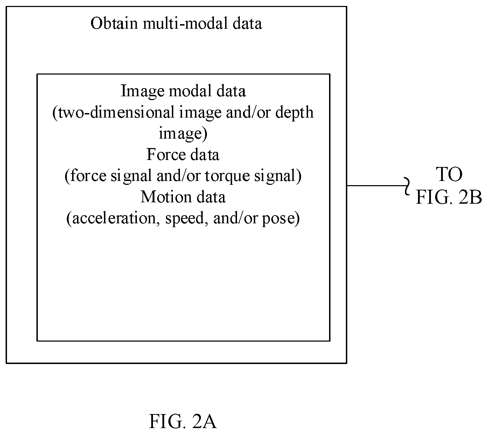

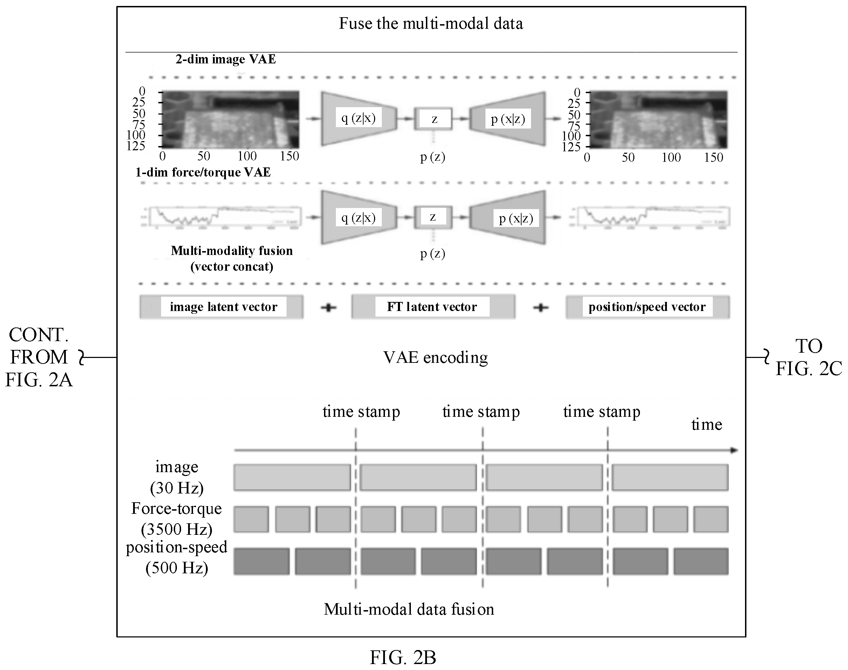

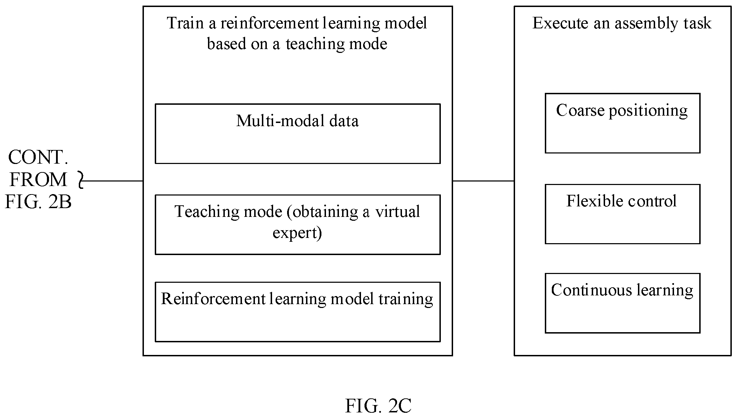

As shown in FIG. 2A, FIG. 2B, and FIG. 2C, the control method relates to one or more of the following processing stages:
obtaining multi-modal data, fusing the multi-modal data, training a reinforcement learning model based on a teaching mode, and executing an assembly task.

The following separately describes each processing stage by using examples, to specifically describe related steps and data in each processing stage shown in FIG. 2A, FIG. 2B, and FIG. 2C.

### 1. Obtain multi-modal data.

In this embodiment of this application, the multi-modal data includes at least two of image modal data, force data, and motion data.

For example, the force data may be a force signal and/or a torque signal detected by using a force sensor at a mechanical arm end; the image modal data may include a depth image and/or a two-dimensional image; and the motion data may include one or more of information such as an acceleration, a speed, or a pose at a mechanical device end.

The multi-modal data includes an assembly position indicated by an assembly task and information about a mechanical device that is to execute the assembly task.

Objects related to data of different modalities in the multi-modal data may be the same, or may be different.

For example, in the multi-modal data, data of each modality includes the assembly position indicated by the assembly task and the information about the mechanical device that is to execute the assembly task.

Alternatively, in the multi-modal data, the data of the different modalities may relate to different objects. For example, if the assembly position remains fixed, the force data may be the information about the mechanical device that is to execute the assembly task, and does not need to include information about the assembly position. The image modal data may include both the information about the assembly position and the information about the mechanical device.

In some embodiments, obtaining the multi-modal data includes:
separately obtaining data of different modalities in the multi-modal data by using a plurality of processes.

In this embodiment of this application, the different modalities in the multi-modal data may be obtained by using different processes. Alternatively, data of one or more modalities may be obtained by using any one of the plurality of processes, but data obtained by using different processes is different. Alternatively, a part of the force data, for example, pressure data, may be obtained by using one process, and another part of the force data (for example, torque data) and the motion data are obtained by using another process. It can be learned that there may be a plurality of manners of separately obtaining the data of the different modalities in the multi-modal data by using the plurality of processes. This is not limited herein.

For example, in some examples, the image modal data, the force data, and the motion data may be separately obtained by using different processes.

Alternatively, in some other examples, separately collecting the data of the different modalities in the multi-modal data by using the plurality of processes includes:
obtaining the image modal data and the motion data by using a first process; and
obtaining the force data by using a second process.

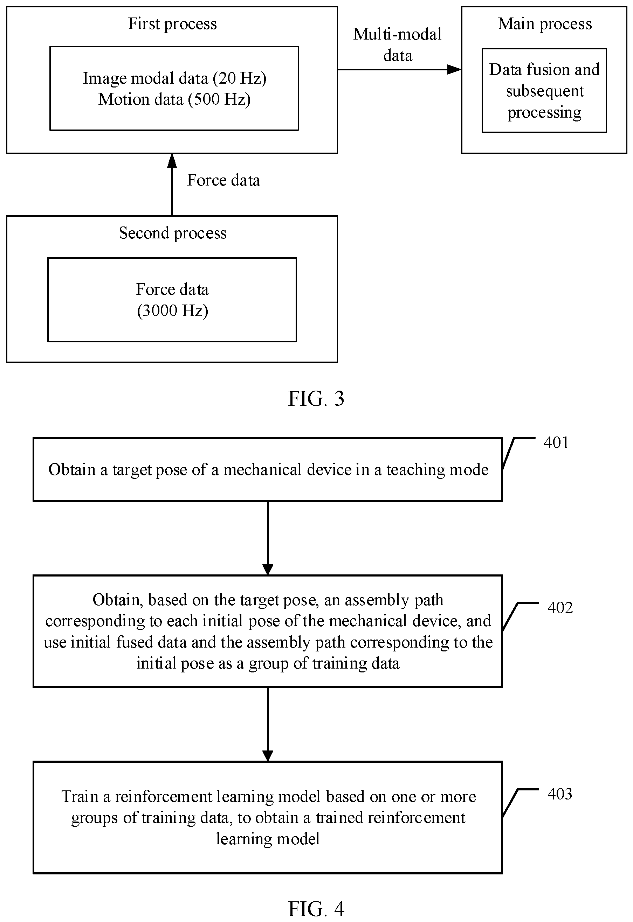

An example shown in FIG. 3 is used for description.

In the example shown in FIG. 3, the image modal data and the motion data may be obtained by using the first process. A corresponding frequency at which an image sensor sends the image modal data to the first process may be 20 Hz, and a corresponding frequency at which a motion sensor sends the motion data to the first process may be 500 Hz.

In addition, in the example shown in FIG. 3, the force data may be obtained by using the second process. Because the force sensor usually collects the force data at a relatively high frequency, for example, the frequency may reach 3000 Hz, the force sensor may send the force data to the second process at a relatively high frequency such as 3000 Hz.

The second process may store force data within latest specified duration by using a data queue, and periodically send data in the data queue to the first process.

The first process may align the force data, the image modal data, and the motion data in a time dimension based on obtained information such as respective timestamps of the force data, the image modal data, and the motion data, and transfer the aligned force data, image modal data, and motion data to a main process, so that the main process performs data fusion to obtain fused data, and performs subsequent processing based on the fused data.

### 2. Fuse the multi-modal data.

In this embodiment of this application, after the multi-modal data is obtained, the multi-modal data may be fused to obtain the fused data.

There may be a plurality of fusion manners of the multi-modal data. This is not limited herein.

For example, in a time dimension, the data of the different modalities in the multi-modal data may be aligned, then the data of the different modalities may be mapped to same feature space, and then fusion is performed.

For example, in an example, the multi-modal data includes the image modal data, and further includes the force data and/or the motion data.

Fusing the multi-modal data to obtain the fused data includes:
processing the image modal data by using an encoder, to obtain a feature representation corresponding to the image modal data; and
fusing the feature representation with the force data and/or the motion data, to obtain the fused data.

In this embodiment of this application, feature extraction may be performed on the image modal data by using the encoder, and the image modal data is mapped to the low-dimensional feature representation (for example, a one-dimensional feature representation), so that the low-dimensional feature representation may be spliced with the one-dimensional force data and/or motion data, to implement effective fusion of the multi-modal data to obtain the fused data.

A specific type of the encoder is not limited herein.

The following uses an example in which the encoder is a variational auto encoder (variational auto encoder, VAE) to describe training and encoding modes of the encoder.

Firstly, a training process of the variational auto encoder is introduced.

The variational auto encoder may include an encoder and a decoder *p_{θ}*(**x** | **z**).

Training data of the variational auto encoder may be an image modality.

In the training process, the training data **x** may be input into the encoder, to encode the image modal data by using the encoder *q_{ϕ}*(**z** | **x**), where *ϕ* is a parameter of the encoder.

The encoder *q_{ϕ}*(**z** | **x**) maps the input data to a potential feature representation **z** in potential space. It is assumed that a prior distribution *p*(**z**) of the potential feature representation **z** is a standard normal distribution, that is: $p \left(z\right) = N \left(0, I\right)$

**I** is an identity matrix.

The decoder *p_{θ}*(**x** | **z**) then maps the potential feature representation **z** back to original data space and reconstructs the training data **x**, where *θ* is a parameter of the decoder.

A loss function may include a first loss term and a second loss term, where the first loss term indicates a reconstruction error, the second loss term indicates a KL divergence of the potential feature representation, and the variational auto encoder is trained by using the loss function, to minimize the reconstruction error and the KL divergence of the potential feature representation. The reconstruction error measures a generation capability of the decoder, and the KL divergence measures a difference between the prior distribution of the potential feature representation and a distribution learned by the encoder.

Therefore, the loss function 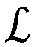 (*θ*, *ϕ*; **x**) may be represented by using the following formula: $L \left(θ, ϕ, x\right) = - {E}_{q ϕ} \left(z\left|x\right.\right) \left[log {p}_{θ}\left(x\left|z\right.\right)\right] + KL \left({q}_{ϕ}\left.\left(z\left|x\right.\right)\right‖p\left(z\right)\right) #$$- {E}_{{q}_{ϕ} \left(z\left|x\right.\right)} \left[log {p}_{θ}\left(x\left|z\right.\right)\right]$ is used to describe the reconstruction error, and KL (*q_{ϕ}*(**z** | **x** ) ∥ *p*(**z**)) is the KL divergence of the potential feature representation.

According to a stochastic gradient descent algorithm or the like, the loss function is minimized, and the parameters *ϕ* and *θ* of the encoder and the decoder are learned until a corresponding loss value converges, or until a quantity of iteration times reaches a quantity of times threshold.

In this way, the variational auto encoder can learn the distribution of the potential feature representation and the low-dimensional feature representation of the training data in the training process.

In this way, an encoder in a trained variational auto encoder may be used as the encoder configured to obtain the feature representation corresponding to the image modal data in the foregoing embodiment.

In other words, the image modal data in the multi-modal data may be input into the encoder in the trained variational auto encoder, to obtain the low-dimensional feature representation output by the encoder.

Then, the feature representation corresponding to the image modal data may be spliced with the force data and/or the motion data, to obtain the fused data.

In some embodiments, the data of the different modalities in the multi-modal data may be separately obtained by using the plurality of processes, so that parallel obtaining and processing of the data of the different modalities can be implemented, to improve collection and processing efficiency of the data of the different modalities. After the data of the different modalities is separately collected by using the plurality of processes, the data of the different modalities may be aligned and fused in dimensions such as time and feature space.

For example, in some embodiments, the image modal data and the motion data may be obtained by using the first process, and the force data may be obtained by using the second process.

Then, the image modal data and the motion data that are obtained by the first process and the force data obtained by the second process may be aligned and fused based on time information, to obtain the fused data.

The image modal data and the motion data that are obtained by the first process may be aligned and fused based on the time information such as a timestamp.

For example, in the example shown in FIG. 3, the second process may store force data within latest specified duration by using a data queue, and periodically send data in the data queue to the first process.

The first process may align the force data, the image modal data, and the motion data in a time dimension based on obtained information such as respective timestamps of the force data, the image modal data, and the motion data, and transfer the aligned force data, image modal data, and motion data to a main process, so that the main process performs data fusion to obtain the fused data, and performs subsequent processing based on the fused data.

Certainly, in some other examples, functions of different processes may be different. This is not limited in this embodiment of this application.

In some examples, multi-modal data collection and subsequent processing may be implemented by using at least two control layers in a software control framework.

The at least two control layers may include a first control layer and a second control layer.

The second control layer may be considered as a bottom admittance layer of the at least two control layers. The second control layer may include the second process. In this way, as a speed control inner loop in the software control framework, the second control layer may obtain data of a relatively high frequency (for example, a frequency of 3000 Hz) in the multi-modal data, for example, obtain the force data, and may also obtain motion data of a high frequency.

The first control layer may be considered as a top control layer of the at least two control layers. The first control layer may include the first process, and may further include the main process and the like, to obtain data of a relatively low frequency (for example, a frequency of 20 Hz) in the multi-modal data, for example, obtain the image modal data and motion data of a relatively low frequency, to implement synchronization and fusion operations of the multi-modal data, to obtain the fused data for subsequent processing based on the fused data.

Any one of the foregoing embodiments of obtaining the multi-modal data and fusing the multi-modal data may be used in a subsequent training process of the reinforcement learning model and a process of executing the assembly task. In a subsequent example, a manner of obtaining the multi-modal data and a manner of fusing the multi-modal data are not described in detail.

### 3. Train the reinforcement learning model based on the teaching mode.

In some embodiments, the reinforcement learning model may be trained, to subsequently execute the assembly task by using a trained reinforcement learning model.

A structure of the reinforcement learning model may be an existing reinforcement learning model, or may be a reinforcement learning model developed subsequently. This is not limited in this embodiment of this application. For example, the reinforcement learning model may include one or more layers of multilayer perceptrons (multilayer perceptron, MLP), or may include another structure of a deep neural network (deep neutral networks, DNN).

The following describes an example of a training process of the reinforcement learning model.

Specifically, as shown in FIG. 4, in some embodiments, the training process of the reinforcement learning model may include steps 401 to 403.

Step 401: Obtain a target pose of a mechanical device in a teaching mode.

The target pose indicates that a relative position between the mechanical device and an assembly position indicated by an assembly task satisfies a specified condition.

In the teaching mode, the mechanical device is guided, by using a manual operation, to execute a specific task. An operator may control a movement and an action of the mechanical device in real time by using a key, a handle, or a touchscreen to complete a complex operation demonstration.

In this embodiment of this application, in the teaching mode, a structure such as a mechanical device end may be aligned with the assembly position (for example, a hole) indicated by the assembly task in a non-contact manner, to obtain the target pose of the mechanical device.

The target pose is usually a position at which the mechanical device can successfully execute the assembly task. For example, for a peg-in-hole assembly task, the target pose may indicate that the mechanical device end is non-contact aligned with the assembly position indicated by the assembly task. In this case, the mechanical device may accurately complete the peg-in-hole assembly task by using a peg-in-hole insertion operation after reaching the target pose.

Step 402: Obtain, based on the target pose, an assembly path corresponding to each initial pose of the mechanical device, and use initial multi-modal data and the assembly path corresponding to the initial pose as a group of training data.

In this embodiment of this application, after the target pose is determined, in a case of any random initial pose, the mechanical device is controlled to complete the assembly task by moving to the target pose.

Therefore, one or more initial pose may be determined in a random manner or the like, and the assembly path corresponding to each initial pose of the mechanical device may be obtained based on the target pose. In an assembly path corresponding to any initial pose, in the initial pose, the mechanical device may be controlled to move to the target pose, and complete the assembly task in the target pose (for example, complete peg-in-hole insertion in the target pose).

In addition, in this embodiment of this application, initial multi-modal data corresponding to the mechanical device in the any initial pose may be further collected, and the initial multi-modal data is fused, to obtain initial fused data corresponding to the any initial pose.

In this embodiment of this application, the initial fused data and the assembly path corresponding to the initial pose are used as a group of training data.

In this way, one or more groups of training data may be obtained based on one or more random initial poses and the target pose.

Step 403: Train the reinforcement learning model based on the one or more groups of training data, to obtain a trained reinforcement learning model.

In this embodiment of this application, the target pose may be determined through a single teaching operation, to implement repeated positioning of the mechanical device by using the target pose. It can be learned that the target pose determined in the teaching mode may be used as a virtual expert, and automatic repeated positioning and correct assembly of the mechanical device may be implemented in any random initial pose, so that a plurality of groups of training data are efficiently obtained, and the training data is efficiently provided for subsequent reinforcement learning model training without a large quantity of manual operations, to greatly improve training efficiency.

When the reinforcement learning model is trained based on the training data, the training process may include at least one iterative process.

The following describes an example of an i^{th} iterative process. The i^{th} iterative process may be any iterative process in the training process. Steps of another iterative process may be the same as or similar to steps of the i^{th} iterative process, and may include fewer steps than the steps of the i^{th} iterative process, or may include more steps than the steps of the i^{th} iterative process.

The i^{th} iterative process may include one or more assembly processes, and each assembly process includes at least one action.

There may be a plurality of manners of determining an action in each assembly process.

For example, in some embodiments, in a j^{th} assembly process of the i^{th} iterative process, the method includes:
determining at least one action in the j^{th} assembly process based on a probability of the i^{th} iterative process, a probability threshold, and an initial pose in the i^{th} iterative process, where j is a positive integer.

A specific value of the probability threshold is not limited herein. For example, the probability threshold may be 60%, 80%, or the like.

In some examples, if the probability of the i^{th} iterative process is not greater than the probability threshold, the action in the j^{th} assembly process is determined based on the target pose and a pose of the mechanical device before the action in the j^{th} assembly process.

In this embodiment of this application, the probability may reflect a possibility of successfully completing the assembly process.

It can be learned that, if the probability of the i^{th} iterative process is not greater than the probability threshold, it indicates that in the assembly process of the i^{th} iterative process, the probability of successfully completing assembly is relatively low. In this case, the training process may be in an early stage.

To avoid damage caused by an incorrect assembly process to the mechanical device, a target position, and the like, and to improve training efficiency and accelerate a convergence speed, when the probability of the i^{th} iterative process is not greater than the probability threshold, the action in the j^{th} assembly process may be determined based on the target pose and first fused data before the action in the j^{th} assembly process.

In this case, the action may be determined based on the target pose and the pose of the mechanical device before the action.

For example, if an initial pose in the j^{th} assembly process is the same as an initial pose corresponding to any group of training data, a path of the mechanical device in the j^{th} assembly process may be determined based on an assembly path in the group of training data, that is, each action in the j^{th} assembly process is determined.

If the initial pose in the j^{th} assembly process is different from an initial pose corresponding to each group of training data, a pose of the mechanical device before the action may be compared with the target pose, to determine the action, so that the mechanical device approaches or reaches the target pose, to correctly execute the assembly task.

In some other examples, if the probability of the i^{th} iterative process is greater than the probability threshold, the action in the j^{th} assembly process is determined based on first fused data before the action in the j^{th} assembly process and by using the reinforcement learning model in the i^{th} iterative process.

In this example, if the probability of the i^{th} iterative process is greater than the probability threshold, it indicates that in the assembly process of the i^{th} iterative process, a probability of successfully completing assembly is relatively high. In this case, the training process may be in a later stage.

In this case, the first fused data before the action in the j^{th} assembly process may be processed by using the reinforcement learning model in the i^{th} iterative process, to obtain the action in the j^{th} assembly process.

After an action in the j^{th} assembly process is determined, a group of state transition data corresponding to the action may be obtained. Each group of state transition data includes first fused data before the corresponding action, parameter information of the corresponding action, second fused data after the corresponding action, and reward information of the corresponding action. The reward information is determined based on an assembly result of an assembly process to which the corresponding action belongs.

Specifically, first multi-modal data before the corresponding action may be collected by using a data collection component in a control system, and the first fused data is obtained through data fusion. After the action is performed, second multi-modal data after the corresponding action is collected by using the data collection component, and the second fused data is obtained through data fusion.

The reward information of the corresponding action may be determined based on a reward function.

For example, the reward function r may be in the following form: $r = \left\{\begin{matrix}1 , & success insertion \\ 0 , & else\end{matrix}\right.$

If the assembly task is successfully completed in the assembly process to which the action belongs (success insertion), the reward information of the action in the assembly process is 1. Otherwise, the reward information of the action in the assembly process is 0.

Using an action A as an example, a group of state transition data corresponding to the action A may be (**s**, *a*, **s***'*, *r*). **s** is first fused data before the action A, *a* is parameter information of the action A, s' is second fused data after the action A, and r is reward information of the action A.

In this way, a group of state transition data corresponding to each action in one or more assembly processes included in the i^{th} iterative process may be obtained.

After the one or more assembly processes of the i^{th} iterative process are performed, the probability of the i^{th} iterative process may be updated.

Specifically, in some embodiments, the probability of the i^{th} iterative process may be updated based on a success rate of the one or more assembly processes included in the i^{th} iterative process.

Generally, if the success rate of the one or more assembly processes included in the i^{th} iterative process is relatively high, an updated probability of the i^{th} iterative process is correspondingly high. If the success rate of the one or more assembly processes included in the i^{th} iterative process is relatively low, an updated probability of the i^{th} iterative process is correspondingly low.

For example, an average success rate *avg_succ_rate* of n assembly processes in the i^{th} iterative process may be collected, and the probability *p* of the i^{th} iterative process is updated based on the average success rate *avg_succ_rate*. $p = \left\{\begin{matrix}min \left(p+0.1,1\right) & if avg _ succ _ rate > 0.8 \\ max \left(p-0.1,0\right) & else\end{matrix}\right.$

In addition, after the one or more assembly processes of the i^{th} iterative process are performed, the reinforcement learning model in the i^{th} iterative process may be updated.

Specifically, in some embodiments, the reinforcement learning model in the i^{th} iterative process may be updated based on one or more groups of state transition data in the i^{th} iterative process.

For example, if 100 assembly processes of the i^{th} iterative process include 600 actions in total, 600 groups of state transition data of the i^{th} iterative process may be obtained.

In this example, m groups of state transition data may be randomly extracted from the 600 groups of state transition data, to calculate a gradient of the reinforcement learning model in the i^{th} iterative process by using a method such as gradient descent, to update the reinforcement learning model in the i^{th} iterative process.

Referring to the foregoing i^{th} iterative process, the reinforcement learning model is trained by using one or more iterative processes until a probability p converges to 1. In addition, an average success rate avg_succ_rate of the assembly processes in the iterative process may be greater than a success rate threshold (for example, 0.99), or training of the reinforcement learning model is ended until a quantity of iteration times reaches a specified quantity of times, to obtain the trained reinforcement learning model.

### 4. Execute the assembly task.

After the trained reinforcement learning model is obtained, the assembly task may be executed by using the trained reinforcement learning model.

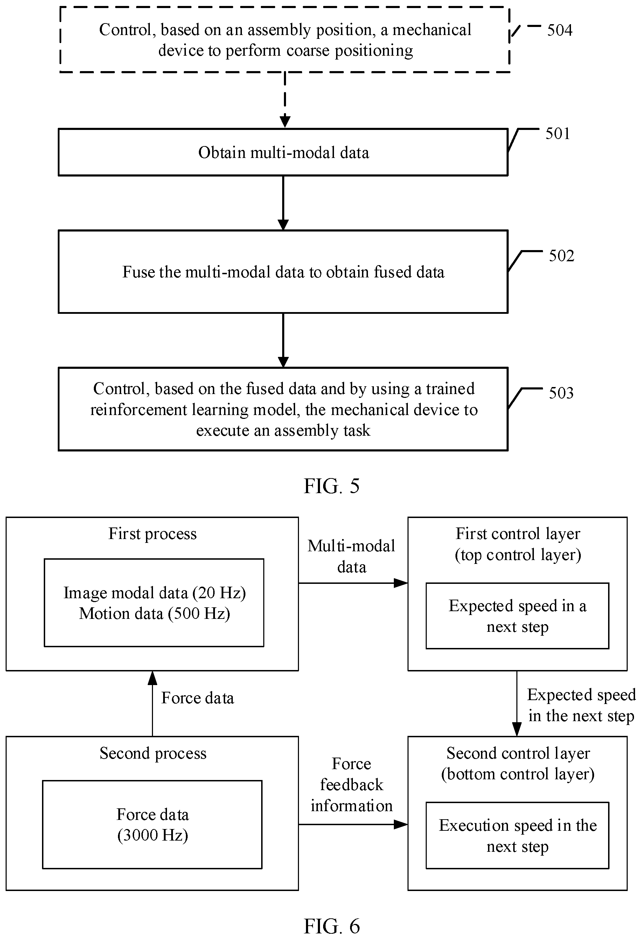

Specifically, as shown in FIG. 5, in some embodiments, a control method includes steps 501 to 503, and in some embodiments, may further include step 504.

Step 501: Obtain multi-modal data.

The multi-modal data includes at least two of image modal data, force data, and motion data, and the multi-modal data includes an assembly position indicated by an assembly task and information about a mechanical device that is to execute the assembly task.

In this embodiment of this application, for a manner of obtaining the multi-modal data, refer to any embodiment of a processing stage of obtaining the multi-modal data in the foregoing processing stage. Details are not described herein again.

Step 502: Fuse the multi-modal data to obtain fused data.

In this embodiment of this application, for a manner of fusing the multi-modal data, refer to any embodiment of a processing stage of obtaining and fusing the multi-modal data in the foregoing processing stage. Details are not described herein again.

Step 503: Control, based on the fused data and by using a trained reinforcement learning model, the mechanical device to execute the assembly task.

In this embodiment of this application, the fused data may be input into the trained reinforcement learning model, and a next action is output by using the trained reinforcement learning model, to control the mechanical device to execute the assembly task based on the next action.

Executing the assembly task may include one or more actions. This is not limited herein.

In an example, when the mechanical device needs to be controlled to perform a plurality of actions to complete the assembly task, if the assembly task is not completed, after the mechanical device is controlled to perform one action, steps 501 and 502 are returned to be performed, to obtain new fused data, obtain a new next action by using the trained reinforcement learning model, and control the mechanical device to perform the next action until the assembly task ends.

It can be learned that, in this embodiment of this application, the multi-modal data such as an image, force data, and motion data may be fused to obtain the fused data, and multi-dimensional feature information is extracted from the fused data by using the trained reinforcement learning model, to determine a control policy for the mechanical device, so that the mechanical device can successfully complete the assembly task based on the multi-dimensional feature information in a plurality of scenarios, thereby improving a success rate and robustness of executing the assembly task by the mechanical device.

In addition, in some embodiments, before step 501 is performed, step 504 may be further performed.

Step 504: Control, based on the assembly position, the mechanical device to perform coarse positioning.

Coarse positioning means that a distance between the mechanical device and a target position is within a specified range, for example, less than a specified distance threshold, so that a high-precision assembly task is executed subsequently with relatively high precision.

In this embodiment of this application, there may be a plurality of manners of indicating the mechanical device to perform coarse positioning. This is not limited herein.

The following describes an example of a coarse positioning method by using an example in which the mechanical device is controlled, based on depth image information and the assembly position, to perform coarse positioning.

Specifically, the coarse positioning method may include the following steps:

A depth image sensor is calibrated, to obtain a pose ${T}_{C}^{B}$ of the depth image sensor in a base coordinate system of a mechanical arm of the mechanical device.

In a teaching mode, the mechanical arm is dragged, so that a mechanical arm end is aligned with the assembly position in a non-contact manner, and a pose ${T}_{TCP ′}^{B}$ of the mechanical arm end in this case is recorded as a reference pose.

Through the depth image sensor, depth image collection and processing are performed on a reference assembly position to obtain 3D point cloud data of the reference assembly position, the point cloud is used as reference point cloud data, and consistency between a posture of the reference point cloud data and a posture of the reference assembly position is defined, so that a pose of the reference point cloud data in a coordinate system of the depth image sensor may be obtained as ${T}_{H ′}^{C}$.

When the assembly task is to be executed, a pose of the assembly position corresponding to the assembly task is in an unknown state, and depth image collection and processing are performed on the assembly position by using the depth image sensor, to obtain target point cloud data of the assembly position and a pose ${T}_{H}^{C}$ of the target point cloud data of the assembly position in the coordinate system of the depth image sensor.

Based on an iterative closest point (iterative closest point, ICP) registration algorithm, a pose ${T}_{H}^{H ′}$ of the target point cloud data relative to the reference point cloud data is obtained: ${T}_{H}^{H ′} = {T}_{H ′}^{{C}^{- 1}} ⋅ {T}_{H}^{C}$

The target pose ${T}_{TCP}^{B}$ at the mechanical arm end when coarse positioning is performed on the assembly position corresponding to the assembly task is obtained through pose transformation: $\begin{matrix}{T}_{TCP}^{B} = {T}_{TCP ′}^{B} ⋅ {{T}_{TCP ′}^{C}}^{- 1} ⋅ {T}_{TCP}^{C} \\ = {T}_{TCP ′}^{B} ⋅ {{T}_{H ′}^{C}}^{- 1} ⋅ {T}_{H}^{C} \\ = {T}_{TCP ′}^{B} ⋅ {T}_{H}^{H ′}\end{matrix}$

The mechanical arm end is controlled to move to the target pose ${T}_{TCP}^{B}$, so that coarse positioning on the assembly position by the mechanical device is implemented.

After the coarse positioning on the assembly position by the mechanical device is implemented, the coarsely positioned mechanical device may be used as the mechanical device that is to execute the assembly task, and step 501 and the subsequent steps are performed.

In addition, in some embodiments, in scenarios such as controlling the mechanical device to execute the assembly task and/or controlling movement of the mechanical device in the process of training the reinforcement learning model, flexible control on the mechanical device may be implemented, to reduce or even avoid mechanical damage caused by a rigid collision or the like in the process of controlling the mechanical device, and provide security assurance for the control system.

The following uses flexible control in a process of executing the assembly task as an example for description.

Specifically, in some embodiments, step 503 includes:
determining an expected position of the mechanical device in a next step based on the fused data and by using the trained reinforcement learning model;
determining an expected speed of the mechanical device in the next step based on the expected position in the next step, and a rigidity characteristic, a damping characteristic, and an inertia characteristic of the mechanical device; and
controlling, based on the expected speed in the next step, the mechanical device to move.

In this embodiment of this application, the fused data is processed by using the trained reinforcement learning model, to output the expected position of the mechanical device in the next step, to determine the expected speed of the mechanical device in the next step based on the expected position in the next step, and the rigidity characteristic, the damping characteristic, and the inertia characteristic of the mechanical device.

A specific manner of determining the expected speed may be obtained based on a dynamic equation.

Specifically, in some examples, the following formula is obtained through second-order equation modeling: ${f}_{ext} = K \left({x}_{des}-x\right) + D \left({\dot{x}}_{des}-\dot{x}\right) + M \left({{x}^{¨}}_{des}-{x}^{¨}\right)$

*x* is a current position of the mechanical device, *x_{des}* is an expected position of the mechanical device in a next stFIep, *fₑₓₜ* represents an external force suffered by the mechanical device (for example, an external force suffered by the mechanical device due to collision with the assembly position), and *K, D, M* represents a rigidity characteristic, a damping characteristic, and an inertia characteristic of the mechanical device respectively.

Based on the foregoing formula, a calculation formula of an expected acceleration *ẍ*_{des} may be obtained: ${{x}^{¨}}_{des} = \frac{1}{M} \left[{f}_{ext}-K\left({x}_{des}-x\right)-D\left({\dot{x}}_{des}-\dot{x}\right)\right] + {x}^{¨}$

In this embodiment of this application, a dynamic attribute of the mechanical device may be changed by adjusting and testing the three parameters: the rigidity characteristic, the damping characteristic, and the inertia characteristic of the mechanical device, so that the mechanical device implements a flexible motion characteristic.

It can be learned that, in this example, after the current position of the mechanical device, the expected position in the next step, and the rigidity characteristic, the damping characteristic, and the inertia characteristic of the mechanical device are determined, the expected acceleration *ẍ*_{des} may be calculated based on the calculation formula of the expected acceleration *ẍ*_{des}. Then, integration may be performed on the expected acceleration *ẍ*_{des}, to obtain the expected speed *ẋ_{des}* of the mechanical device in the next step. A calculation formula of the expected speed *ẋ_{des}* is as follows: ${\dot{x}}_{des} = \int {{x}^{¨}}_{des} dx$

In this way, after the expected speed in the next step is determined, the mechanical device may be controlled, based on the expected speed in the next step, to implement the flexible motion characteristic, to avoid device damage caused by collision with an object such as the assembly position in a process of executing the assembly task, and ensure security of the mechanical device in the process of executing the assembly task.

For example, controlling, based on the expected speed in the next step, the mechanical device to move includes:
controlling, based on the expected speed in the next step and force feedback information of the mechanical device, the mechanical device to move.

In this embodiment of this application, the force feedback information of the mechanical device is used to reflect a status of an external force currently suffered by the mechanical device, to determine whether the mechanical device is currently impacted or the like.

In this way, if the force feedback information indicates that the mechanical device is currently not subjected to the external force, the expected speed in the next step is used as an execution speed, to control the mechanical device to move based on the execution speed. However, if the force feedback information indicates that the mechanical device is currently subjected to the external force, a smaller value of the expected speed in the next step and a preset speed may be used as the execution speed, to control the mechanical device to move based on the execution speed, control the mechanical device to implement the flexible motion characteristic, avoid device damage caused by collision with an object such as the assembly position in the process of executing the assembly task, and ensure security of the mechanical device in the process of executing the assembly task.

In addition, in some examples, at least two control layers may be used to implement the flexible control on the mechanical device.

The at least two control layers may include a first control layer and a second control layer.

In an example shown in FIG. 6, the first control layer is used as a top control layer, and may obtain the multi-modal data by using a first process, and may fuse the multi-modal data to obtain the fused data. Then, the expected position of the mechanical device in the next step is determined based on the fused data and by using the trained reinforcement learning model. Then, the first control layer determines the expected speed of the mechanical device in the next step based on the expected position in the next step, and the rigidity characteristic, the damping characteristic, and the inertia characteristic of the mechanical device.

After the first control layer determines the expected speed of the mechanical device in the next step, the first control layer may transfer the expected speed in the next step to the second control layer. The second control layer may receive force data from a force sensor, to obtain the force feedback information of the mechanical device based on the force data. In this way, the second control layer may determine the execution speed based on the expected speed in the next step and the force feedback information of the mechanical device, to control the mechanical device to move based on the execution speed.

It can be learned that, in this example, the mechanical device may be controlled by using the two control layers, to facilitate efficient processing of the multi-modal data, and directly controlling the mechanical device without buffer based on the expected speed and by using one control layer can be avoided, to improve control accuracy and security.

In some embodiments, after the mechanical device is controlled to execute the assembly task, continuous learning may be further performed on the trained reinforcement learning model based on an execution status of the assembly task, to further improve performance of the reinforcement learning model, and execute the assembly task more accurately and efficiently.

Specifically, in some embodiments, one or more actions of the mechanical device in a process of controlling the mechanical device to execute the assembly task may be obtained, and state transition data corresponding to the one or more actions may be obtained, to update the trained reinforcement learning model based on the state transition data corresponding to the one or more actions of the mechanical device in the process of executing the assembly task.

In the process of executing the assembly task, for specific content of the state transition data corresponding to the one or more actions of the mechanical device and a manner of updating the trained reinforcement learning model based on the state transition data, refer to related content in the foregoing processing stage of training the reinforcement learning model based on the teaching mode. Details are not described herein again.

The foregoing describes the control method provided in embodiments of this application from a plurality of aspects. The following describes a control apparatus provided in embodiments of this application with reference to the accompanying drawings.

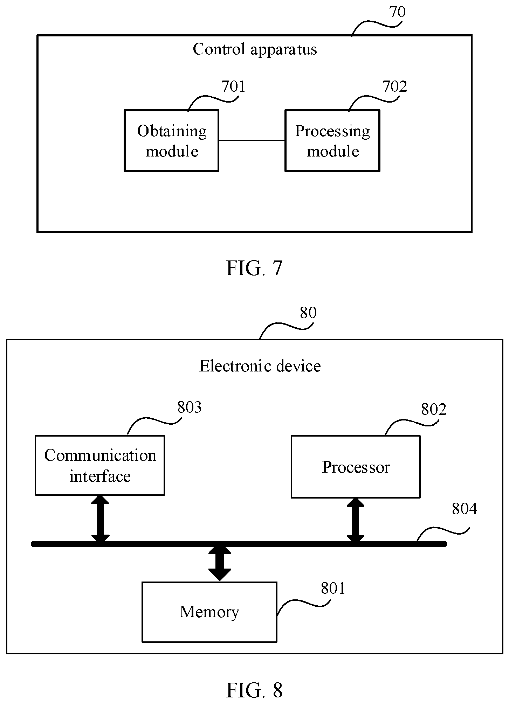

As shown in FIG. 7, an embodiment of this application provides a control apparatus 70. The control apparatus 70 includes:
an obtaining module 701, configured to obtain multi-modal data, where the multi-modal data includes at least two of image modal data, force data, and motion data, and the multi-modal data includes an assembly position indicated by an assembly task and information about a mechanical device that is to execute the assembly task; and
a processing module 702, configured to:
   fuse the multi-modal data to obtain fused data, and
   control based on the fused data and by using a trained reinforcement learning model, the mechanical device to execute the assembly task.

Optionally, the processing module 702 is further configured to:
obtain a target pose of the mechanical device in a teaching mode, where the target pose indicates that a relative position between the mechanical device and the assembly position indicated by the assembly task satisfies a specified condition;
obtain, based on the target pose, an assembly path corresponding to each initial pose of the mechanical device, and use initial fused data and the assembly path corresponding to the initial pose as a group of training data; and
train a reinforcement learning model based on one or more groups of training data, to obtain the trained reinforcement learning model.

Optionally, the training of the reinforcement learning model includes one or more iterative processes, where an i^{th} iterative process includes one or more assembly processes, each assembly process includes at least one action, each action corresponds to a group of state transition data, each group of state transition data includes first fused data before a corresponding action, parameter information of the corresponding action, second fused data after the corresponding action, and reward information of the corresponding action, the reward information is determined based on an assembly result of an assembly process to which the corresponding action belongs, and i is a positive integer.

In the i^{th} iterative process, the processing module 702 is configured to:
update the reinforcement learning model in the i^{th} iterative process based on one or more groups of state transition data in the i^{th} iterative process.

Optionally, in a j^{th} assembly process of the i^{th} iterative process, the processing module 702 is configured to:
determine at least one action in the j^{th} assembly process based on a probability of the i^{th} iterative process, a probability threshold, and an initial pose in the i^{th} iterative process, where j is a positive integer.

Optionally, the processing module 702 is configured to:
if the probability of the i^{th} iterative process is greater than the probability threshold, determine the action in the j^{th} assembly process based on first fused data before the action in the j^{th} assembly process and by using the reinforcement learning model in the i^{th} iterative process; or
if the probability of the i^{th} iterative process is not greater than the probability threshold, determine the action in the j^{th} assembly process based on the target pose and a pose of the mechanical device before the action in the j^{th} assembly process.

Optionally, the processing module 702 is further configured to:
update the probability of the i^{th} iterative process based on a success rate of the one or more assembly processes included in the i^{th} iterative process.

Optionally, the processing module 702 is configured to:
determine an expected position of the mechanical device in a next step based on the fused data and by using the trained reinforcement learning model;
determine an expected speed of the mechanical device in the next step based on the expected position in the next step, and a rigidity characteristic, a damping characteristic, and an inertia characteristic of the mechanical device; and
control, based on the expected speed in the next step, the mechanical device to move.

Optionally, the processing module 702 is configured to control, based on the expected speed in the next step and force feedback information of the mechanical device, the mechanical device to move.

Optionally, the processing module 702 is configured to:
separately obtain data of different modalities in the multi-modal data by using a plurality of processes.

Optionally, the multi-modal data includes image modal data, and further includes force data and/or motion data.

The processing module 702 is configured to:
process the image modal data by using an encoder, to obtain a feature representation corresponding to the image modal data; and
fuse the feature representation with the force data and/or the motion data, to obtain the fused data.

Optionally, before obtaining the multi-modal data, the processing module 702 is further configured to:
control, based on the assembly position, the mechanical device to perform coarse positioning.

FIG. 8 is a diagram of a possible logical structure of an electronic device 80 according to an embodiment of this application. The electronic device 80 is configured to implement a function of the electronic device in any one of the foregoing embodiments. The electronic device 80 includes a memory 801, a processor 802, a communication interface 803, and a bus 804. The memory 801, the processor 802, and the communication interface 803 implement mutual communication connections through the bus 804.

The memory 801 may be a read-only memory (read-only memory, ROM), a static storage device, a dynamic storage device, or a random access memory (random access memory, RAM). The memory 801 may store a program. When the program stored in the memory 801 is executed by the processor 802, the processor 802 and the communication interface 803 are configured to perform the one or more steps in the foregoing control method embodiments.

The processor 802 may be a central processing unit (central processing unit, CPU), a microprocessor, an application-specific integrated circuit (application-specific integrated circuit, ASIC), a graphics processing unit (graphics processing unit, GPU), a digital signal processor (digital signal processor, DSP), a field programmable gate array (field programmable gate array, FPGA) or another programmable logic device, a discrete gate or transistor logic device, a discrete hardware component, or any combination thereof, and is configured to execute a related program to implement functions that need to be executed by the obtaining module and the processing module in the control apparatus in the foregoing embodiment, or to perform one or more steps in the method embodiments of this application. The steps of the methods disclosed with reference to embodiments of this application may be performed by a hardware decoding processor, or may be performed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 801. The processor 802 reads information in the memory 801, and performs one or more steps in the foregoing control method embodiments in combination with hardware of the processor 802.

The communication interface 803 uses, for example but not limited to, a transceiver apparatus of a transceiver type, to implement communication between the electronic device 80 and another device or a communication network.

The bus 804 may implement a channel for communicating information between the components (for example, the memory 801, the processor 802, and the communication interface 803) of the electronic device 80. The bus 804 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one thick line is for representing the bus in FIG. 8, but this does not mean that there is only one bus or only one type of bus.

In another embodiment of this application, a computer-readable storage medium is further provided. The computer-readable storage medium stores computer-executable instructions. When a processor of a device executes the computer-executable instructions, the device performs the steps performed by the processor in FIG. 8.

In another embodiment of this application, a computer program product is further provided. The computer program product includes computer-executable instructions, and the computer-executable instructions are stored in a computer-readable storage medium. When a processor of a device executes the computer-executable instructions, the device performs the steps performed by the processor in FIG. 8.

In another embodiment of this application, a chip system is further provided. The chip system includes a processor, and the processor is configured to implement the steps performed by the processor in FIG. 8. In a possible design, the chip system may further include a memory. The memory is configured to store program instructions and data that are necessary for the data writing apparatus. The chip system may include a chip, or may include a chip and another discrete component.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A control method, wherein the method comprises:
obtaining multi-modal data, wherein the multi-modal data comprises at least two of image modal data, force data, and motion data, and the multi-modal data comprises an assembly position indicated by an assembly task and information about a mechanical device that is to execute the assembly task;
fusing the multi-modal data to obtain fused data; and
controlling, based on the fused data and by using a trained reinforcement learning model, the mechanical device to execute the assembly task.

2. The method according to claim 1, wherein the method further comprises:
obtaining a target pose of the mechanical device in a teaching mode, wherein the target pose indicates that a relative position between the mechanical device and the assembly position indicated by the assembly task satisfies a specified condition;
obtaining, based on the target pose, an assembly path corresponding to each initial pose of the mechanical device, and using initial fused data and the assembly path corresponding to the initial pose as a group of training data; and
training the reinforcement learning model based on one or more groups of training data, to obtain the trained reinforcement learning model.

3. The method according to claim 2, wherein the training of the reinforcement learning model comprises one or more iterative processes, wherein an i^{th} iterative process comprises one or more assembly processes, each assembly process comprises at least one action, each action corresponds to a group of state transition data, each group of state transition data comprises first fused data before a corresponding action, parameter information of the corresponding action, second fused data after the corresponding action, and reward information of the corresponding action, the reward information is determined based on an assembly result of an assembly process to which the corresponding action belongs, and i is a positive integer; and
in the i^{th} iterative process, the method comprises:
updating the reinforcement learning model in the i^{th} iterative process based on one or more groups of state transition data in the i^{th} iterative process.

4. The method according to claim 3, wherein in a j^{th} assembly process of the i^{th} iterative process, the method comprises:
determining at least one action in the j^{th} assembly process based on a probability of the i^{th} iterative process, a probability threshold, and an initial pose in the i^{th} iterative process, wherein j is a positive integer.

5. The method according to claim 4, wherein the determining the at least one action in the j^{th} assembly process based on the probability of the i^{th} iterative process, the probability threshold, and the initial pose in the i^{th} iterative process comprises:
if the probability of the i^{th} iterative process is greater than the probability threshold, determining the action in the j^{th} assembly process based on first fused data before the action in the j^{th} assembly process and by using the reinforcement learning model in the i^{th} iterative process; or
if the probability of the i^{th} iterative process is not greater than the probability threshold, determining the action in the j^{th} assembly process based on the target pose and a pose of the mechanical device before the action in the j^{th} assembly process.

6. The method according to claim 4 or 5, wherein the method further comprises:
updating the probability of the i^{th} iterative process based on a success rate of the one or more assembly processes comprised in the i^{th} iterative process.

7. The method according to any one of claims 1 to 6, wherein the controlling, based on the fused data and by using the trained reinforcement learning model, the mechanical device to execute the assembly task comprises:
determining an expected position of the mechanical device in a next step based on the fused data and by using the trained reinforcement learning model;
determining an expected speed of the mechanical device in the next step based on the expected position in the next step, and a rigidity characteristic, a damping characteristic, and an inertia characteristic of the mechanical device; and
controlling, based on the expected speed in the next step, the mechanical device to move.

8. The method according to claim 7, wherein the controlling, based on the expected speed in the next step, the mechanical device to move comprises:
controlling, based on the expected speed in the next step and force feedback information of the mechanical device, the mechanical device to move.

9. The method according to any one of claims 1 to 8, wherein the obtaining the multi-modal data comprises:
separately obtaining data of different modalities in the multi-modal data by using a plurality of processes.

10. The method according to any one of claims 1 to 9, wherein the multi-modal data comprises the image modal data, and further comprises the force data and/or the motion data; and
the fusing the multi-modal data to obtain the fused data comprises:
processing the image modal data by using an encoder, to obtain a feature representation corresponding to the image modal data, and
fusing the feature representation with the force data and/or the motion data, to obtain the fused data.

11. The method according to any one of claims 1 to 10, wherein before obtaining the multi-modal data, the method further comprises:
controlling, based on the assembly position, the mechanical device to perform coarse positioning.

12. A control apparatus, comprising:
an obtaining module, configured to obtain multi-modal data, wherein the multi-modal data comprises at least two of image modal data, force data, and motion data, and the multi-modal data comprises an assembly position indicated by an assembly task and information about a mechanical device that is to execute the assembly task; and
a processing module, configured to:
fuse the multi-modal data to obtain fused data, and
control, based on the fused data and by using a trained reinforcement learning model, the mechanical device to execute the assembly task.

13. The apparatus according to claim 12, wherein
the processing module is further configured to:
obtain a target pose of the mechanical device in a teaching mode, wherein the target pose indicates that a relative position between the mechanical device and the assembly position indicated by the assembly task satisfies a specified condition;
obtain, based on the target pose, an assembly path corresponding to each initial pose of the mechanical device, and use initial fused data and the assembly path corresponding to the initial pose as a group of training data; and
train the reinforcement learning model based on one or more groups of training data, to obtain the trained reinforcement learning model.

14. The apparatus according to claim 13, wherein the training of the reinforcement learning model comprises one or more iterative processes, wherein an i^{th} iterative process comprises one or more assembly processes, each assembly process comprises at least one action, each action corresponds to a group of state transition data, each group of state transition data comprises first fused data before a corresponding action, parameter information of the corresponding action, second fused data after the corresponding action, and reward information of the corresponding action, the reward information is determined based on an assembly result of an assembly process to which the corresponding action belongs, and i is a positive integer; and
in the i^{th} iterative process, the processing module is configured to:
update the reinforcement learning model in the i^{th} iterative process based on one or more groups of state transition data in the i^{th} iterative process.

15. The apparatus according to claim 14, wherein
in a j^{th} assembly process of the i^{th} iterative process, the processing module is configured to:
determine at least one action in the j^{th} assembly process based on a probability of the i^{th} iterative process, a probability threshold, and an initial pose in the i^{th} iterative process, wherein j is a positive integer.

16. The apparatus according to claim 15, wherein
the processing module is configured to:
if the probability of the i^{th} iterative process is greater than the probability threshold, determine the action in the j^{th} assembly process based on first fused data before the action in the j^{th} assembly process and by using the reinforcement learning model in the i^{th} iterative process; or
if the probability of the i^{th} iterative process is not greater than the probability threshold, determine the action in the j^{th} assembly process based on the target pose and a pose of the mechanical device before the action in the j^{th} assembly process.

17. The apparatus according to any one of claims 12 to 16, wherein
the processing module is configured to:
determine an expected position of the mechanical device in a next step based on the fused data and by using the trained reinforcement learning model;
determine an expected speed of the mechanical device in the next step based on the expected position in the next step, and a rigidity characteristic, a damping characteristic, and an inertia characteristic of the mechanical device; and
control, based on the expected speed in the next step, the mechanical device to move.

18. The apparatus according to claim 17, wherein
the processing module is configured to control, based on the expected speed in the next step and force feedback information of the mechanical device, the mechanical device to move.

19. An electronic device, wherein the electronic device comprises at least one processor, a memory, and instructions that are stored in the memory and that are executable by the at least one processor, and the at least one processor executes the instructions to implement steps of the method according to any one of claims 1 to 11.

20. A computer-readable storage medium, wherein the computer-readable storage medium stores a computer program, and when the computer program is executed by a processor, the method according to any one of claims 1 to 11 is implemented.
